# DEMANDE DE BREVET EUROPEEN

(11) **EP 0 828 218 A1**
(43) Date de publication de la demande: **11.03.1998**
(21) Numéro de dépôt: 97402031.5
(22) Date de dépôt: 01.09.1997
(51) Int. Cl.: G06F 12/14, G06F 1/00

(54) **Fichier certifié d'archivage de documents électroniques**

(30) Priorité: 04.09.1996 FR 9610782
(71) Demandeur: Atos, 92800 Puteaux (FR)
(72) Inventeur: Bourdin, Michel Paul, 92800 Puteaux (FR)
(74) Mandataire: Robert, Jean-Pierre

(57) **Abrégé**

Fichier (F) d'archivage d'une suite de documents (D), chacun se présentant sous forme de données (E) informatiques pourvues d'un sceau (S) apposé par l'émetteur du document, chaque document à l'exception du premier document (D1) comportant un sceau de sauvegarde (SS2, SSn) calculé par un algorithme (C) à partir du sceau (S2, Sn) de ce document et du sceau de sauvegarde (SS1, SSn-1) du document précédent (D1, Dn-1).

## Description

La présente invention concerne un fichier de documents électroniques pourvu d'un moyen de certification de son contenu.

L'archivage de documents électroniques sur un support d'enregistrement présente l'inconvénient de laisser ouverte la possibilité de modifier un document voire de l'effacer, ce qui interdit de pouvoir utiliser ce fichier comme une référence incontestable en cas de litige ou de contestation portant sur l'un des documents.

La présente invention a pour objet un fichier qui comporte des moyens permettant de détecter toute intervention non seulement sur les documents qu'il contient après leur introduction dans le fichier, mais également sur l'ordre dans lequel ils ont été introduits.

L'invention s'applique plus particulièrement aux documents transactionnels c'est-à-dire ceux qui constituent un échange de données entre un émetteur et un destinataire, par exemple des ordres de virement financier, des commandes, des ordres de transfert de marchandises.... Ces documents transactionnels sont le plus souvent assortis d'un sceau qui permet d'en vérifier le caractère authentique. Le sceau, par exemple d'un ordre de virement, est élaboré par un algorithme de cryptage à partir d'un ou plusieurs éléments sensibles (montant, coordonnées du destinataire...) et d'une clé confidentielle détenue par l'émetteur. Un contrôleur du document est alors à même de reproduire cette opération de codage des éléments sensibles et de vérifier l'authenticité du sceau au moyen d'un algorithme et d'une clé appropriés.

Le document émis transite donc par un contrôleur qui, après contrôle, le certifie à l'égard du destinataire. Ce contrôleur peut être également chargé de conserver un duplicata du document ou peut aussi intervenir dans la gestion des documents émis afin par exemple de rationaliser leur transmission (groupage par destinataire des documents issus d'un ou plusieurs émetteurs). Ainsi dans de nombreux cas il est utile de procéder à la création d'un fichier de base à partir duquel un ou plusieurs traitements sont réalisés. Il serait avantageux pour l'opérateur de ces traitements de disposer de moyens pour constituer ce fichier de manière incontestable afin, en cas de litige ou de mauvais fonctionnement d'un traitement, de constituer pour cet opérateur une référence sûre à laquelle il est possible de rapprocher la question litigieuse.

Dans ce cadre particulier et plus généralement dans le cadre d'un archivage de documents électroniques, l'invention a pour objet un fichier d'archivage d'une suite de documents, chacun se présentant sous forme de données informatiques pourvues d'un sceau apposé par l'émetteur du document, dans lequel chaque document courant comporte un sceau de sauvegarde calculé par un algorithme à partir du sceau du document et du sceau de sauvegarde du document précédent.

Par cette disposition, chaque document d'un fichier est enchaîné au document précédent si bien qu'une suppression d'un document serait immédiatement repérable. En effet le sceau de sauvegarde du premier document de la série est calculé à partir de son sceau et d'une clé aléatoire initiale constituant la signature de sécurité du fichier. Ainsi, la vérification de l'intégrité du fichier consiste à relever le sceau de sauvegarde du dernier document et à le traiter par un algorithme inverse de celui qui a servi à son établissement, en combinaison avec le sceau de scellement de ce document pour obtenir de proche en proche les sceaux de sauvegarde des documents précédents jusqu'à obtenir la clé aléatoire du fichier. Si cette clé est obtenue par cette opération, on a procédé à une certification du fichier. En revanche la non-obtention de la clé aléatoire initiale constitue un motif de non-acceptation du fichier.

Par ailleurs le fichier peut comporter, inséré dans la série de documents, une pluralité de documents artificiels émis par le système d'archivage qui permettent de rythmer le fichier ainsi constitué pour par exemple en faciliter l'exploitation ultérieure.

D'autres caractéristiques et avantages de l'invention ressortiront de la description donnée ci-après d'un exemple de réalisation.

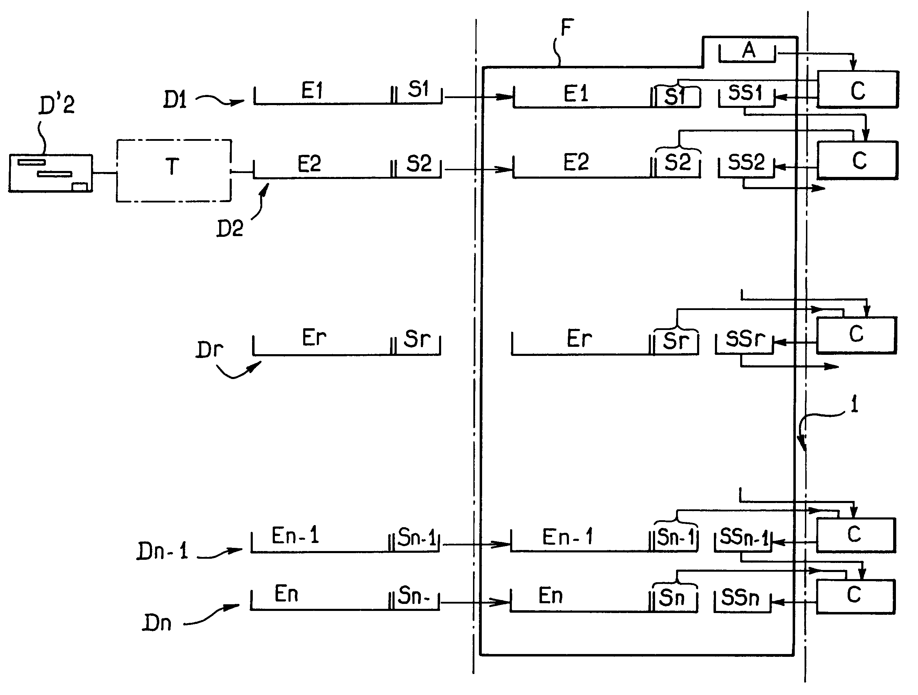

Il sera fait référence aux dessins annexés dans lequel la figure unique est un schéma d'un procédé de création d'un fichier selon l'invention.

Le fichier F représenté à la figure est constitué par l'enregistrement d'une série de documents D1.... Dn, chaque document comportant un ensemble de données E1.... En et un sceau de scellement S1.... Sn. Ces documents se présentent à l'entrée du fichier sous la forme d'une succession d'octets, que cette présentation parvienne directement de l'émetteur ou qu'elle soit le résultat d'un traitement T d'un document tel que D'2 imprimé.

Pour constituer le fichier F, on choisit tout d'abord une clé aléatoire A qui y est enregistrée et qui constitue par exemple la signature de sécurité de ce fichier. Au moyen d'une unité de calcul 1, et après avoir entré le premier document D1, on traite par un algorithme C de cryptage le sceau S1 de ce document avec la clé A pour obtenir le sceau de sauvegarde du document SS1 que l'on associe au document D1 enregistré.

Le second document D2 introduit dans le fichier reçoit un sceau de sauvegarde SS2 issu du traitement par le même algorithme C du sceau de scellement S2 du document avec pour clé le sceau de sauvegarde SS1 du document précédent. On poursuit la constitution du fichier de la même manière pour chacun des documents successifs qui y sont enregistrés pour obtenir, associé au dernier document Dn, un sceau de sauvegarde SSn. Le fichier n est ainsi pourvu de moyens pour vérifier à tout moment son intégrité. Comme énoncé précédemment, cette vérification réside dans un traitement au moyen d'un algorithme de cryptage inverse de celui qui a permis d'obtenir les sceaux de sauvegarde, de ces sceaux de sauvegarde pour obtenir la clé initiale qui est comparée avec la valeur aléatoire A enregistrée dans le fichier. S'il y a identité le fichier peut être considéré comme certifié et les documents qu'il contient considérés comme n'avoir pas été modifiés après leur enregistrement dans le fichier.

Si un litige ou une question surgit à propos d'un document, on peut donc copier du fichier le document litigieux pour d'abord vérifier son caractère authentique au moyen de son sceau de scellement. Si l'authenticité du document n'est pas constatée, la question relève donc de la responsabilité de l'émetteur et dégage ainsi celle de l'archiviste. Lorsque l'authenticité du document est vérifiée, on peut alors cantonner la recherche de l'explication de la question litigieuse en aval du fichier, dans les différentes traitements qu'un duplicata de chaque document aurait pu subir.

On mentionnera comme exemple d'application de l'invention le traitement des ordres de virement émis par plusieurs entreprises en direction de plusieurs banques. Le traitement de ces ordres de virement peut être centralisé par un organisme qui contrôle le sceau des ordres reçus, constitue le fichier F, et à partir de ce fichier procède à des tris pour grouper par exemple les ordres de virements provenant de plusieurs entreprises mais adressés à une même banque. On comprend que l'organisme central de gestion du traitement de ces ordres, en créant un fichier conforme à l'invention, dispose en cas de mauvais fonctionnement ou de litige, d'un instrument permettant de montrer jusqu'à quel stade sa responsabilité est engagée dans une opération défectueuse ou litigieuse.

Le fichier de l'invention peut également comporter, inséré dans la série de documents provenant d'émetteurs, une pluralité de documents Dr émis par l'archiviste lui-même qui permettent de rythmer ce fichier et le cas échéant de faciliter son exploitation lors du traitement ultérieur des documents. Le sceau de sauvegarde SSr de ces documents artificiels est obtenu de la même manière que celui de chacun des documents reçus par des tiers et archivés.

## Revendications

1. Fichier (F) d'archivage d'une suite de documents (D), chacun se présentant sous forme de données (E) informatiques pourvues d'un sceau (S) apposé par l'émetteur du document, caractérisé en ce que chaque document à l'exception du premier document (D1) comporte un sceau de sauvegarde (SS2, SSn) calculé par un algorithme (C) à partir du sceau (S2, Sn) de ce document et du sceau de sauvegarde (SS1, SSn-1) du document précédent (D1, Dn-1).

2. Fichier selon la revendication 1, caractérisé en ce que le sceau de sauvegarde (SS1) du premier document (D1) de la série est calculé à partir de son sceau de scellement (S1) et d'une clé aléatoire initiale (A) constituant la signature de sécurité du fichier (F).

3. Fichier selon la revendication 1 ou la revendication 2, caractérisé en ce qu'il comporte, insérée dans la série de documents, une pluralité de documents (Dr) artificiels émis par le système d'archivage.
